# EUROPÄISCHE PATENTSCHRIFT

(11) **EP 2 411 307 B1**
(45) Veröffentlichungstag und Bekanntmachung des Hinweises auf die Patenterteilung: **06.06.2012**
(21) Anmeldenummer: 10705359.7
(22) Anmeldetag: 24.02.2010
(51) Int. Cl.: B65G 47/84, B65G 47/08, B65G 47/91

(54) **VORRICHTUNG UND VERFAHREN ZUM ÜBERFÜHREN VON PRODUKTEN MITTELS GREIFERN**
DEVICE AND METHOD FOR TRANSFERRING PRODUCTS USING GRIPPERS
DISPOSITIF ET PROCEDE DE TRANSFERT DE PRODUITS AU MOYEN D'ÉLÉMENTS DE PRÉHENSION

(30) Priorität: 23.03.2009 DE 102009001746
(43) Veröffentlichungstag der Anmeldung: 01.02.2012
(73) Patentinhaber: Robert Bosch GmbH, 70442 Stuttgart (DE)
(72) Erfinder: WIPF, Alfred, 79798 Jestetten (DE)
(86) Internationale Anmeldenummer: PCT/EP2010/052342
(87) Internationale Veröffentlichungsnummer: WO 2010/108750

(56) Entgegenhaltungen:
- WO-A2-03/047977

## Beschreibung

### TECHNISCHES GEBIET

Die vorliegende Erfindung betrifft eine Vorrichtung zum Überführen von Produkten von einem Zufuhrförderband auf ein Abfuhrförderband, umfassend einen Linearmotor mit auf einer Führung verschiebbar geführten Förderelementen mit Greifern zur zeitweiligen Aufnahme von Produkten. Im Rahmen der Erfindung liegt auch ein Verfahren zum Betrieb der Vorrichtung.

### STAND DER TECHNIK

Für die Zuführung von Produkten, wie z.B. bereits verpackte Schokoriegel, zu einer Schlauchpackmaschine zur Erstellung eines Multipack werden in der Regel konventionelle Bandsysteme eingesetzt. Diese übernehmen die Produkte aus dem Auslaufband einer Schlauchpackmaschine, drehen sie, bilden einen kurzen Produktstau zur Pufferung von kleinen Geschwindigkeitsschwankungen, beschleunigen die Produkte auf die Geschwindigkeit der Weiterverpackungsmaschine und synchronisieren sie schliesslich mit der Zufuhrkette dieser Maschine. Eine ähnliche Aufgabe besteht beim Austragen von Produkten aus einem Produktteppich, um diese einzeln einer Schlauchpackmaschine zuzuführen. Auch hier werden die Produkte mittels einer Austragstation, welche vor allem aus einem mit einer Weiche versehenen Bandsystem besteht, dem Produktteppich entnommen und dann mittels mehrerer Bänder ausgerichtet, gestaut, vereinzelt, beschleunigt, mit der Verpackungsmaschine synchronisiert und der Zufuhrkette der Verpackungsmaschine übergeben. Diese Systeme bestehen aus einer Vielzahl von Bändern und erreichen so schnell eine Länge von bis zu 10 m.

Die vorstehenden Aufgaben können durch Einsatz eines Zufuhrsystems bestehend aus umlaufenden, individuellen Linearmotorwagen, welche die Produkte greifen und direkt in die Zufuhrkette ablegen, kompakter gelöst werden. Dabei können die Produkte während des Transportweges gedreht werden, und die Synchronisierung kann direkt durch gezieltes Beschleunigen oder Abbremsen der einzelnen Produkte in ihren Wagen erfolgen. Solche Systeme gemäß dem Oberbegriff des Anspruches 1 sind z.B. aus US-A-7 134 258 und EP-A-1 123 886 bekannt.

Nachteilig bei diesem System ist der mit den umlaufenden Linearmotorwagen verbundene, grosse Aufwand. Die Zufuhr von Vakuum zum Greifen der Produkte auf ein umlaufendes System ist anspruchsvoll, und es wird für Vor- und Rücklauf sowie die zwei Umlenkungen eine grosse, teure Linearmotorstrecke benötigt. Auch stehen die Wagen, die sich gerade im Umlauf befinden, nicht zur Verfügung, was die erforderliche Wagenzahl erhöht und das System zusätzlich verteuert. Weiter sind die Umlenkstrecken nur durch zusätzlichen technischen Aufwand zu realisieren, da an den Umlenkstrecken der notwendige enge Motorspalt zwischen feststehendem Primärteil und bewegtem Sekundärteil der Wagen nicht gewährleistet werden kann. Zudem benötigt der Umlauf einen vergleichsweise grossen Radius, was dem Gesamtsystem ein grosses Bauvolumen verleiht.

Weiter können Produkte auch mittels eines Pick&Place-Roboters in die Zufuhrkette einer Verpackungsmaschine gelegt werden. Nachteilig ist hier zum einen, dass in der Regel ein Vision-System benötigt wird, mit dem der Roboter die Produkte erkennen kann, sowie die geringe Leistung von etwa 100 Produkte/Minute, die mit einem Roboter erreicht werden kann. Meist werden jedoch Leistungen von 400 - 800 Produkte/Minute angestrebt, was eine grosse Anzahl Roboter erfordert und damit hohe Kosten und einen grossen Platzbedarf verursacht.

Gruppen können ebenfalls mittels einer Gruppiereinrichtung, wie einer sogenannten Tänzerkette, gebildet und mittels eines Zweiachsroboters mit Multipicker -- ein sogenannter Toploader -- übergeben werden. Auch hier ist der Platzbedarf und der technische Aufwand gross und die Flexibilität eingeschränkt.

### DARSTELLUNG DER ERFINDUNG

Der Erfindung liegt die Aufgabe zugrunde, eine Vorrichtung der eingangs genannten Art so weiterzubilden, dass die Nachteile und Kosten, die den aus dem Stand der Technik bekannten Linearsystemen mit umlaufenden Wagen anhaften, entfallen.

Zur erfindungsgemässen Lösung der Aufgabe führt, dass die Führung als lineare Führungsstrecke ausgebildet ist und die Förderelemente zur Aufnahme und Ablage der Produkte auf der Führungsstrecke hin und her verschiebbar sind, wobei bei in Förderrichtung des Zufuhrförderbandes hintereinander in einer Linie zugeführten Produkten das Zufuhrförderband, das Abfuhrförderband und die Führungsstrecke zumindest in einem seitlichen Überlappungsbereich parallel nebeneinander angeordnet sind, und bei in Förderrichtung des Zufuhrförderbandes nebeneinander in Reihen zugeführten Produkten das Zufuhrförderband senkrecht zum Abfuhrförderband angeordnet ist und das Abfuhrförderband und die Führungsstrecke parallel zueinander und mit dem Zufuhrförderband zumindest in einem seitlichen Überlappungsbereich nebeneinander angeordnet sind.

Bevorzugt sind die Greifer zur Erzeugung einer Verschiebebewegung quer zur Förderrichtung an einem auf den Förderelementen angeordneten Schwenkarm angeordnet. Zweckmässigerweise ist hierbei der Schwenkarm zur Ausführung einer den erforderlichen Verfahrweg der Förderelemente zur Aufnahme und Ablage der Produkte verringernden Schwenkbewegung ausgestaltet.

Die Greifer können über einen gemeinsamen Antrieb, insbesondere über eine gemeinsame Antriebskulisse, gleichzeitig schwenkbar, anhebbar und absenkbar sein. Die Greifer können aber auch über eigene Antriebe zur Ausführung von Schwenk-, Hub- und Verschiebebewegungen individuell steuerbar sein.

Verschiebe- und Schwenkbewegungen können auch durch weitere Linearmotoren oder zusätzliche Verschiebeelemente erzeugbar sein. Beispielsweise kann ein Greifer über eine Scherenkinematik mit wenigstens zwei Verschiebeelementen verbunden sein.

Bei einem bevorzugten Verfahren zum Betrieb einer erfindungsgemässen Vorrichtung werden zur Leistungssteigerung der Vorrichtung die Verfahrwege der Förderelemente von Produktaufnahmepositionen zu Produktablagepositionen und zurück durch überlappende Anordnung eines Produktaufnahmebereichs und eines Produktablagebereichs verkürzt. Für einen optimalen Betrieb weisen der Produktaufnahmebereich und der Produktablagebereich eine von der Symmetrie leicht abweichende Anordnung auf.

Durch den fehlenden Umlauf müssen die Förderelemente zwischen Greif- und Ablagepositionen hin und her fahren. Dies würde im Normalfall zu einer starken Einschränkung der Produktionsleistung des Systems führen, da einige Zeit benötigt wird, bis die Förderelemente nach der Ablage der Produkte wieder zur Aufnahme neuer Produkte zur Verfügung stehen.

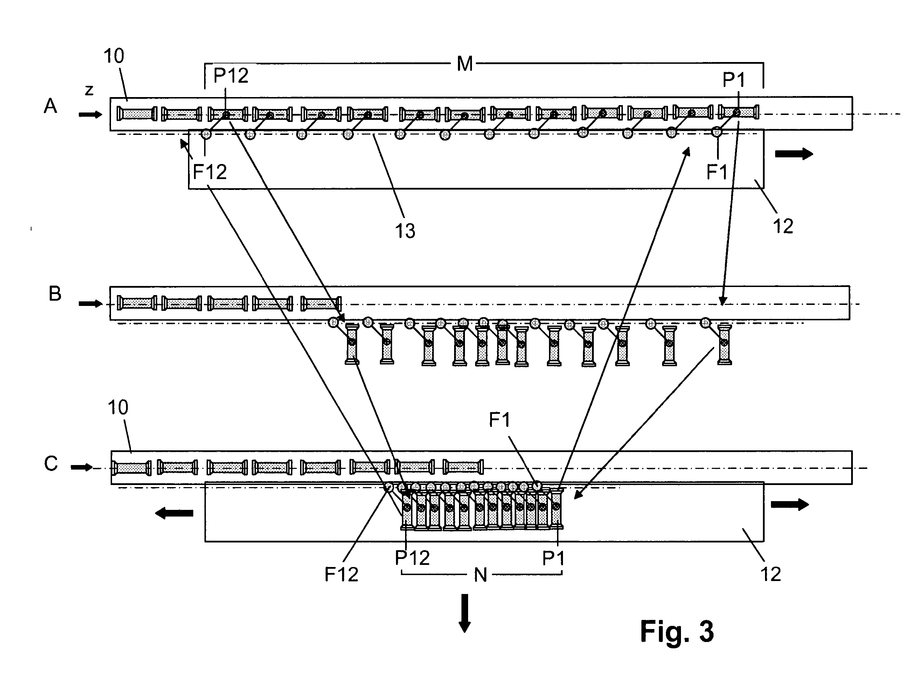

Durch eine geschickte, weiter unten anhand der Fig. 3 näher erläuterte Anordnung der Produktaufnahme- und -ablagepositionen sowie durch den vorgeschlagenen Aufbau der Förderelemente lassen sich aber diese Wartezeiten minimieren:
- Die Ablagestrecke kann gegenüber der Aufnahmestrecke so angeordnet werden, dass die Förderelemente nur eine minimale Bewegung ausführen müssen, so dass die Förderelemente nach der Produktablage schnell wieder an der Aufnahmeposition zur Verfügung stehen. Die Leistung wird dabei durch die beiden äussersten Förderelemente bestimmt, welche für die Bildung der Produktgruppen den grössten Weg zurücklegen müssen. Dabei muss das Förderelement, welches die Gruppierbewegung entgegengesetzt der Produktflussrichtung ausübt, eine zusätzliche Bewegungsumkehr leisten und ist am stärksten belastet. Daher ist die optimale Anordnung der Aufnahme- und der Ablagebereiche nicht symmetrisch, sondern leicht in Richtung des stärker belasteten Förderelementes verschoben, so dass dieses nur einen geringeren Weg zurücklegen muss. Bei einer optimalen Anordnung werden die Aufnahme- und Ablagebereiche so in Überlappung gebracht, dass beispielsweise für den Fall, dass Aufnahme- und Ablagefluss gleichgerichtet sind, das letzte Förderelement während der Transformation sich kurzfristig rückwärts bewegen kann und damit bereits wieder nahe der Aufnahmeposition steht, und das erste Förderelement sich nur wenig stromabwärts bewegen muss. Die Anordnung lässt sich dabei durch eine Analyse der Zykluszeiten des ersten und des letzten Förderelementes optimieren. Diese Optimierung ist um so wichtiger, je grösser der Unterschied der Gruppenbreite zwischen Aufnahme- und Ablageordnung ist.
- Besonders geringe Wege können auch erreicht werden, wenn Aufnahme- und Ablagerichtung im Gegenstrom angeordnet werden, da in diesem Fall die Ablage erfolgen kann, wenn sich alle Förderelemente im Rücklauf zur Aufnahmeposition befinden. Diese Variante ist insbesondere vorteilhaft, wenn die Produkte ungefähr im selben Abstand aufgenommen und abgelegt werden.
- Auf den Förderelementen können Schwenkeinrichtungen aufgebracht sein, welche neben dem Transport der Produkte quer zur Aufnahme- bzw. Ablagerichtung die Produkte um z. B. 90° drehen.
- Durch eine geeignete Ansteuerung der Förderelemente können Leerstellen in der Produktzufuhr geschlossen werden, so dass auch bei einem lückenhaften Produktstrom jede Ablageposition mit einem Produkt bestückt wird. Zu diesem Zweck wartet ein Förderelement beim Auftreten einer Leerstelle, bis die nächste Position in der Zuführung, welche mit einem Produkt versehen ist, in seinen Pickbereich kommt. Die weiteren Förderelemente greifen entsprechend Produkte an späteren Positionen. Ebenso können als fehlerhaft erkannte Produkte nicht transferiert und verpackt werden, indem sie wie eine Leerstelle übersprungen werden.

Weitere vorteilhafte Ausgestaltungen der erfindungsgemässen Vorrichtung und des erfindungsgemässen Verfahrens sind Gegenstand von abhängigen Patentansprüchen.

Die sich mit der erfindungsgemässen Vorrichtung u. a. ergebenden Vorteile sind
- Kompakter Aufbau
- Definiertes, schonendes, minimales Produkthandling
- kein Umlauf der Förderelemente notwendig
- nur ein vergleichsweise kurzes Linearmotormodul
- geringe Anzahl von Förderelementen erforderlich
- kostengünstig im Vergleich mit umlaufender Variante
- flexibler und kompakter als konventionelle Variante
- Produkte werden bei höchster Leistung zentriert
- Die Ablagegeschwindigkeit ist der nachfolgenden Maschine anpassbar
- Leerstellen können ausgeglichen werden
- Automatische Formatumstellung
- Automatische Gruppenumstellung
- Nur gute Packungen werden gefördert
- Minimaler Unterhalt, gute Zugänglichkeit

### KURZE BESCHREIBUNG DER ZEICHNUNGEN

Weitere Vorteile, Merkmale und Einzelheiten der Erfindung ergeben sich aus der nachfolgenden Beschreibung bevorzugter Ausführungsbeispiele sowie anhand der Zeichnung, die lediglich zur Erläuterung dient und nicht einschränkend auszulegen ist. Die Zeichnung zeigt schematisch in
- Fig. 1: eine vereinfachte Darstellung einer ersten Anordnung zur Übergabe von Produkten von einem Zufuhr- auf ein Abfuhrförderband;
- Fig. 2: eine vereinfachte Darstellung einer zweiten Anordnung zur Übergabe von Produkten von einem Zufuhr- auf ein Abfuhrförderband;
- Fig. 3: eine der Fig. 2 entsprechende Anordnung mit überlappenden Produktaufnahme- und Produktablagebereichen zur Leistungsoptimierung;
- Fig. 4: eine Schrägsicht auf eine dritte Anordnung zur Übergabe von Produkten von einem Zufuhr- auf ein Abfuhrförderband;
- Fig. 5: ein Schrägsicht auf einen Teil der Anordnung von Fig. 4 in vergrösserter Darstellung;
- Fig. 6: ein Seitenansicht eines Details der Anordnung von Fig. 4 in Förderrichtung der Förderbänder in vergrösserter Darstellung;
- Fig. 7: eine Draufsicht auf eine Anordnung mit zwei Ablagebereichen;
- Fig. 8: ein Seitenansicht eines Details der Anordnung von Fig. 7 in Förderrichtung der Förderbänder;
- Fig. 9: eine vereinfachte Darstellung einer fünften Anordnung zur Übergabe von Produkten von einem Zufuhr- auf ein Abfuhrförderband;
- Fig. 10: eine vereinfachte Darstellung einer sechsten Anordnung zur Übergabe von Produkten von einem Zufuhr- auf ein Abfuhrförderband;
- Fig. 11: eine vereinfachte Darstellung einer siebten Anordnung zur Übergabe von Produkten von einem Zufuhr- auf ein Abfuhrförderband;
- Fig. 12: eine vereinfachte Darstellung einer achten Anordnung zur Übergabe von Produkten von einem Zufuhr- auf ein Abfuhrförderband;
- Fig. 13: eine erste Möglichkeit zur Verarbeitung von Leerstellen auf einem Zufuhrförderband;
- Fig. 14: eine zweite Möglichkeit zur Verarbeitung von Leerstellen auf einem Zufuhrförderband.
- Fig. 15: eine vereinfachte Darstellung einer neunten Anordnung zur Übergabe von Produkten von einem Zufuhr- auf ein Abfuhrförderband;
- Fig. 16: eine vereinfachte Darstellung einer zehnten Anordnung zur Übergabe von Produkten von einem Zufuhr- auf ein Abfuhrförderband;
- Fig. 17: eine Variante zur Beladung von Trays unter Verwendung von Trennstegen.

### BESCHREIBUNG BEVORZUGTER AUSFÜHRUNGSFORMEN

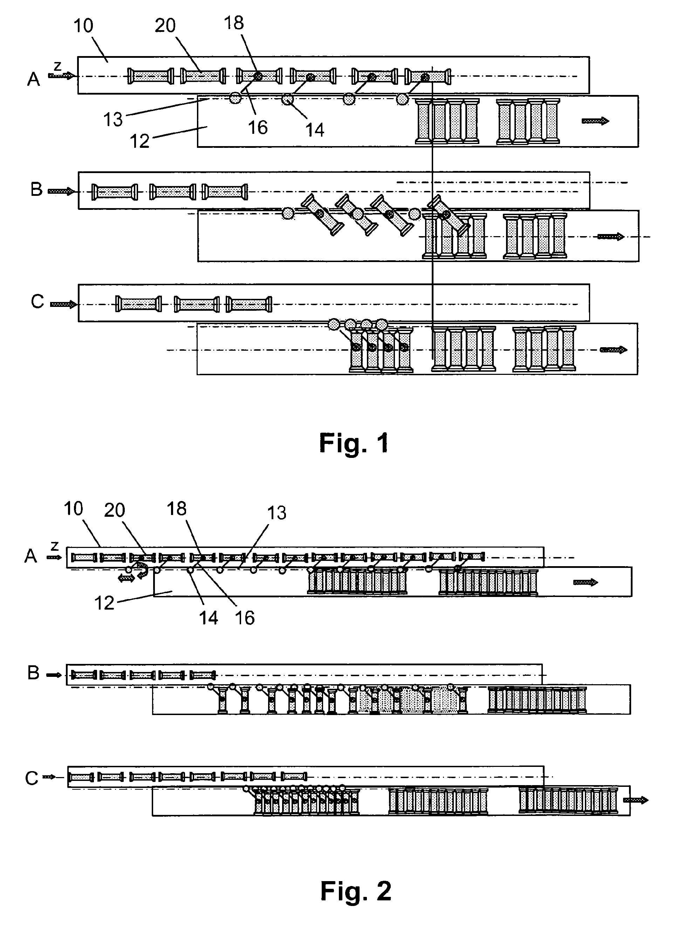

Eine in Fig. 1 gezeigte Anordnung zeigt ein kontinuierlich in Pfeilrichtung sich bewegendes Zufuhrförderband 10 und ein zu diesem parallel angeordnetes, kontinuierlich in Pfeilrichtung sich bewegendes Abfuhrförderband 12. Die beiden Förderbänder 10, 12 liegen nebeneinander und bilden einen seitlichen Überlappungsbereich. In diesem Überlappungsbereich ist ein Linearmotor mit einer linearen Führungstrecke 13 als Führung für auf der Führungsstrecke 13 parallel zu den Förderbändern 10, 12 gesteuert hin und her verschiebbare Förderelemente 14 angeordnet. Jedes Förderelement 14 ist mit einem Schwenkarm 16 und einem am freien Ende des Schwenkarms 16 angeordneten Greifer 18 in Form eines vakuumgesteuerten Saugnapfes ausgestattet. Der Linearmotor ist bei der gezeigten Anordnung mit vier unabhängig von einander ansteuerbaren Förderelementen 14 ausgestattet.

Auf dem Zufuhrförderband 10 werden in einer Linie hintereinander angeordnete Packungen 20 -- im vorliegenden Beispiel Schlauchpackungen -- transportiert. Das Zufuhrförderband 10 entspricht in diesem Fall beispielsweise einem Austragband zum Austrag der Packungen 20 aus einer Schlauchpackmaschine. Die Förderelemente 14 heben über ihre Greifer 18 gleichzeitig vier Schlauchpackungen 20 vom Zufuhrförderband 10 ab (A), die Schwenkarme 16 werden gleichzeitig um 90° verschwenkt (B) und die Förderelemente 14 werden so gegeneinander bewegt, dass die nun parallel und senkrecht zur Förderrichtung des Abfuhrförderbandes 12 ausgerichteten Schlauchpackungen 20 sich seitlich berühren. Die vier eine Reihe bildenden Schlauchpackungen 20 werden auf das Abfuhrförderband abgelegt (C) und beispielsweise zur Verpackung von je vier Schlauchpackungen in einem Multipack einer weiteren Schlauchpackmaschine zugeführt.

Eine in Fig. 2 gezeigte Anordnung entspricht im wesentlichen der vorstehend beschriebenen Anordnung von Fig. 1. Der Linearmotor ist hier mit zwölf Förderelementen 14 bestückt. Die Förderelemente 14 heben über ihre Greifer 18 gleichzeitig zwölf Schlauchpackungen 20 vom Zufuhrförderband 10 ab (A), die Schwenkarme 16 werden gleichzeitig um 90° verschwenkt (B) und die Förderelemente 14 werden so gegeneinander bewegt, dass die nun parallel und senkrecht zur Förderrichtung des Abfuhrförderbandes 12 ausgerichteten Schlauchpackungen 20 sich seitlich berühren. Die zwölf eine Reihe bildenden Packungen 20 werden auf das Abfuhrförderband abgelegt (C).

Anhand der in Fig. 3 gezeigten, im wesentlichen der vorstehend beschriebenen Anordnung von Fig. 2 entsprechenden Anordnung wird nachfolgend die Optimierung des Systems näher erläutert.

Grundsätzlich kann der Produktauslauf bezüglich des Produkteinlaufs
- gleichgerichtet sein (Gleichlauf)
- stillstehen
- entgegengerichtet sein (Gegenlauf)
- sich in einem z. B. rechten Winkel befinden, wie z. B. bei Ablage von Reihen/Gruppen von mehreren Produkten P auf einem Band.

Diese verschiedenen Möglichkeiten der relativen Lage und Laufrichtung des Produktauslaufs bezüglich des Produkteinlaufs sind im Schritt C durch die unterschiedlichen Pfeilrichtungen dargestellt.

Der Ablagebereich N auf dem Abfuhrförderband 12 ist in der Regel schmäler als der Aufnahmebereich M auf dem Zufuhrförderband 10, d. h. die Produkte P werden meist aus einer Längsrichtung in eine Querrichtung gedreht. Falls die Produkte P aus einer Querrichtung in eine Längsrichtung gedreht werden, so ist der Aufnahmebereich breiter als der Ablagebereich, die Überlegungen zur Optimierung der gegenseitigen Anordnung des Ablagebereichs N zum Aufnahmebereich M sind entsprechend gültig.

Die Leistung der Anordnung wird insbesondere von den beiden äussersten Förderelementen rechts F1 und links F12 bestimmt, da diese die grössten Wege zurücklegen.

In dem in Fig. 3 gezeigten Beispiel bewegen sich die Produkte P im Einlauf und im Auslauf nach rechts. In diesem Fall ist es naheliegend, den Ablagebereich an den Aufnahmebereich anzuschliessen, d.h. die die Förderelemente bewegen sich von der Aufnahme der Produkte bis zu ihrer Ablage ausschliesslich nach rechts. Dies hat aber zur Folge, dass die Förderelemente einen weiten Weg nach links zurück zu ihren Aufnahmestellen oder Pickpunkten zurücklegen müssen.

Erfindungsgemäss werden deshalb der Aufnahmebereich M und der Ablagebereich N -- wie in Fig. 3 gezeigt -- überlappend angeordnet, d. h. der Ablagebereich N befindet sich etwa symmetrisch in der Mitte des Aufnahmebereichs M, bzw. leicht nach rechts versetzt, da das äusserste rechte Förderelement F1 durch eine zusätzliche Bewegungsumkehr der höchsten dynamischen Belastung ausgesetzt ist und daher bevorzugt einen etwas geringeren Weg zurücklegen sollte als das äusserste linke Förderelement F12.

Der Bewegungsablauf des äussersten rechten Förderelementes F1 lässt sich wie folgt charakterisieren:
1. Das Förderelement F1 synchronisiert mit grosser Geschwindigkeit auf das Produkt 1 in Richtung des Produktflusses.
2. Bewegungsumkehr, das Förderelement F1 fährt zurück, da sein Ablagepunkt links vom Aufnahmepunkt liegt.
3. Das Förderelement F1 beschleunigt wieder in Richtung des Produktflusses, aber nun mit der geringeren Ablagegeschwindigkeit, und legt das Produkt P1 ab.
4. Das Förderelement F1 bewegt sich zurück zur Aufnahmestelle oder Pickposition, wobei hier nun fast kein Weg mehr erforderlich ist, sondern allenfalls ein kurzer Weg vor oder zurück.

Der Bewegungsablauf des äussersten linken Förderelementes F12 lässt sich wie folgt charakterisieren:
1. Das Förderelement F12 synchronisiert mit grosser Geschwindigkeit auf Produkt 12 in Richtung des Produktflusses.
2. Das Förderelement F12 bewegt sich weiter in Richtung des Produktflusses, reduziert jedoch die Geschwindigkeit auf die Ablagegeschwindigkeit, da sein Ablagepunkt rechts vom Aufnahmepunkt liegt, und legt das Produkt P12 ab.
3. Das Förderelement F12 kehrt nun die Bewegungsrichtung um und bewegt sich zurück zur Aufnahmestelle oder Pickposition. Durch die überlappende Anordnung der Produktaufnahme- und Produktablagebereiche ist der Weg zurück relativ kurz.

Wird der Ablagebereich N weiter nach rechts verschoben, ist dies für das rechte Förderelement F1 günstiger, wird er wieder nach links verschoben, ist dies für das linke Förderelement F12 günstiger. Der optimale Bereich kann für einen bestimmten Anwendungsfall durch eine Dynamikanalyse bzw. Simulation bestimmt werden.

In der Zeichnung sind die während eines Aufnahme- und Ablagezyklus von den beiden äussersten Förderelementen F1 und F12 zurückgelegten Verfahrwege durch Linien mit Richtungspfeilen dargestellt.

Die restlichen Förderelemente F2...F11 bewegen sich zwischen diesen beiden äussersten Förderelementen F1 und F12 und sind daher für die Leistungsoptimierung unkritisch.

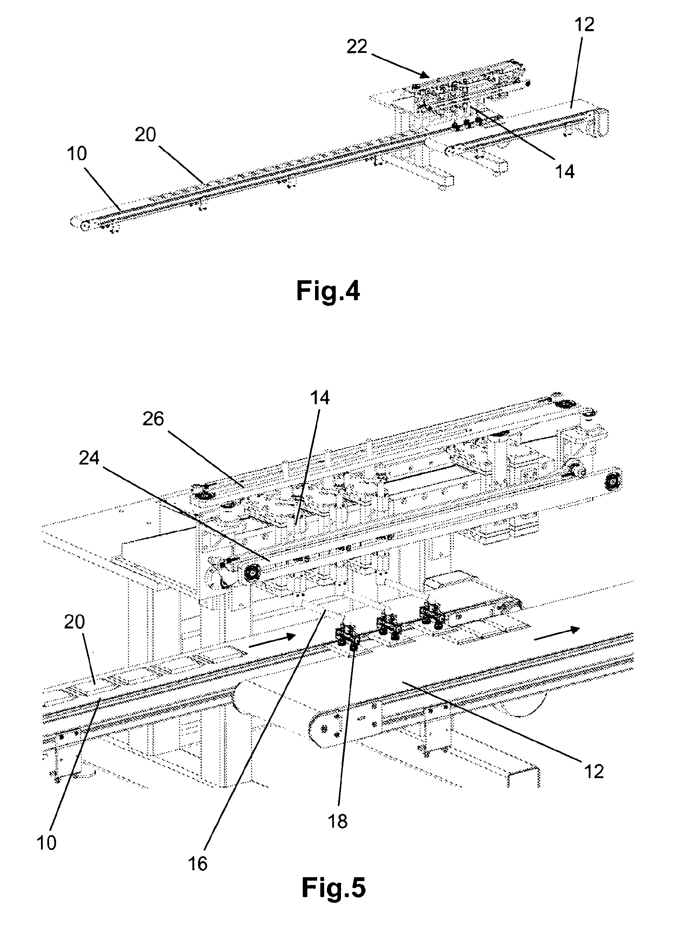

Die Fig. 4, 5 und 6 zeigen eine den Anordnungen der Fig. 1 und 2 entsprechende Anordnung mit drei Förderelementen 14, deren Hub- und Schwenkbewegung über eine gemeinsame Kulissensteuerung 22 erfolgt. Bei der gezeigten Anordnung weisen die Förderelemente 14 einen Schwenkmechanismus zur Erzeugung eines Hubs quer zur Transportrichtung auf. Das Abheben der Packungen 20 mittels Greifer 18 vom Zufuhrförderband 10 und das Ablegen auf das Abfuhrförderband 12 erfolgt über ein erstes Kulissensteuerungselement 24, die Drehung des Schwenkarms 16 über ein zweites Kulissensteuerungselement 26. Die einzelnen Förderelemente 14 sind unabhängig von einander längs der Führungsstrecke 13 eines Linearmotors gesteuert verschiebbar.

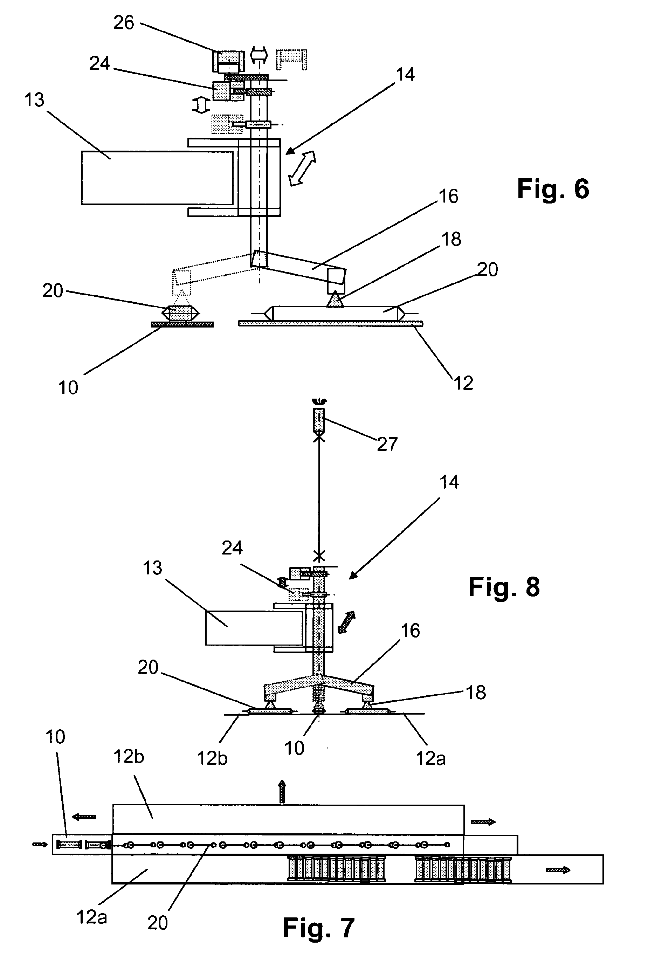

Die Fig. 7 und 8 zeigen eine Variante einer Anordnung mit zwei Ablagepositionen. Auf jeder Seite des Zufuhrförderbandes 10 befindet sich je ein Abfuhrförderband 12a, 12b. Bei der in Fig. 7 gezeigten Ausführung erfolgt die Drehung des Schwenkarms 16 über eine Antriebseinheit 27.

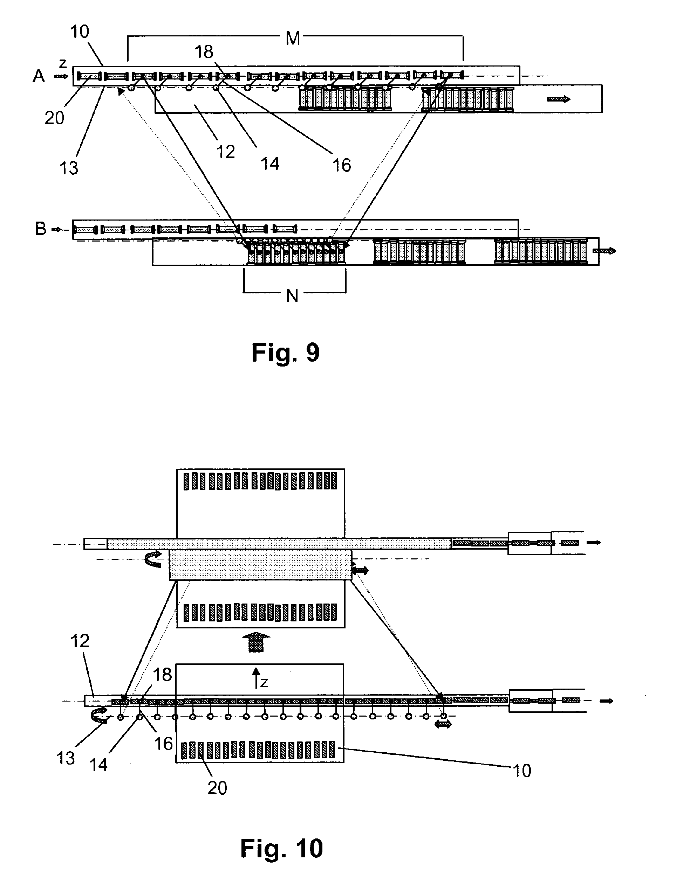

Die in Fig. 9 gezeigte Anordnung entspricht im wesentlichen der Anordnung von Fig. 2. Die zwölf Förderelemente 14 heben über ihre Greifer 18 gleichzeitig zwölf Packungen 20 vom Zufuhrförderband 10 ab (A), die Schwenkarme 16 werden gleichzeitig um 90° verschwenkt, und die Förderelemente 14 werden so gegeneinander bewegt, dass die nun parallel und senkrecht zur Förderrichtung des Abfuhrförderbandes 12 ausgerichteten Packungen 20 sich seitlich berühren. Die zwölf eine Reihe bildenden Packungen 20 werden auf das Abfuhrförderband abgelegt (B). Aus der Zeichnung ist die bereits im Zusammenhang mit Fig. 3 beschriebene Optimierung der Produktübergabe vom Zufuhrförderband 10 auf das Abfuhrförderband 12 durch verringerte Bewegung der Förderelemente 14 ohne weiteres erkennbar.

Fig. 10 zeigt eine Anordnung, bei der das Zufuhrförderband 10 senkrecht auf das Abfuhrförderband 12 trifft und jeweils eine Reihe von neunzehn nebeneinander angeordneten Produkten gleichzeitig von neunzehn Förderelementen 14 vom Zufuhrförderband 10 gepickt und nach Drehung um 90° gleichzeitig in einer Linie auf dem Abfuhrförderband 12 abgelegt werden. Aus der Zeichnung ist ohne die optimale Verfahrweise der neunzehn Förderelemente 14 ersichtlich.

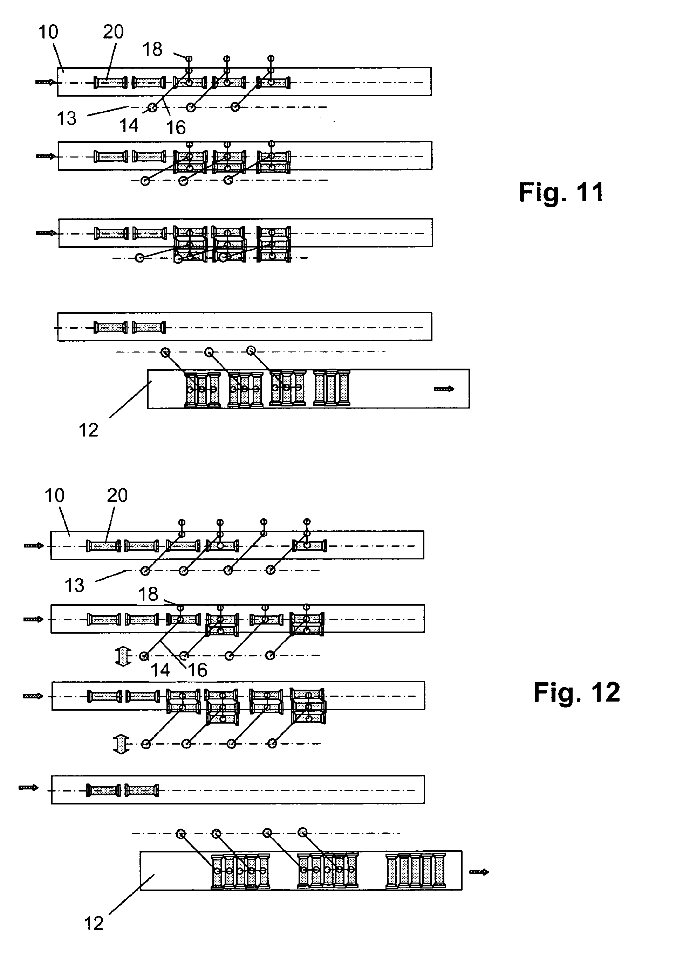

Bei der in Fig. 11 gezeigten Anordnung mit paralleler Anordnung von Zufuhrförderband 10 und Abfuhrförderband 12 sind drei Förderelemente 14 unabhängig von einander längs der parallel zu den Förderbändern 10, 12 angeordneten Führungsstrecke 13 eines Linearmotors verschiebbar. Jedes der drei Förderelemente 14 ist mit einem Schwenkarm 16 mit 3-fach-Greifer 18 ausgestattet. Die 3-fach-Greifer 18 nehmen dreimal gleichzeitig je eine Packung 20 vom Zufuhrförderband 10 auf (A, B, C), wobei jeweils die Schwenkarme 16 zur weiteren Produktaufnahme gleichzeitig verschwenkt werden. Wenn die 3-fach-Greifer 18 mit je drei Packungen 20 belegt sind, erfolgt ein gleichzeitiges Verschwenken aller Schwenkarme um 90°, und die Packungen 20 werden um 90° verdreht in Dreiergruppen auf dem Abfuhrförderband 12 abgelegt (D).

Die in Fig. 12 gezeigte Anordnung unterscheidet sich von der Anordnung gemäss Fig. 11 dadurch, dass anstelle von drei Förderelementen 14 mit je einem 3-fach-Greifer 18 vier Förderelemente 14 mit abwechselnd 2-fach- und 3-fach-Greifern 18 angeordnet sind. Im dargestellten Beispiel werden von jeweils zwei Förderelementen 14 mit 2- bzw. 3-fach-Greifer 18 Gruppen zu fünf Packungen 20 auf dem Abfuhrförderband 12 abgelegt. Zur Aufnahme der Packungen durch die Mehrfachgreifer 18 werden die Förderelemente 14 jeweils um eine entsprechende Distanz senkrecht zu den Förderbändern 10, 12 verschoben. Aus der Zeichnung ist ohne weiteres verständlich, dass mit der Kombination von zwei und drei Greifern 18 alle Konfigurationen mit mehr als zwei Produkten pro Gruppe gebildet werden können.

An Stelle der in den Fig. 11 und 12 gezeigten Aufnahme mehrerer Produkte und Ablage in Gruppen in einer Ebene können mehrere Produkte auch von Stapelgreifern aufgenommen und als Stapel abgelegt werden.

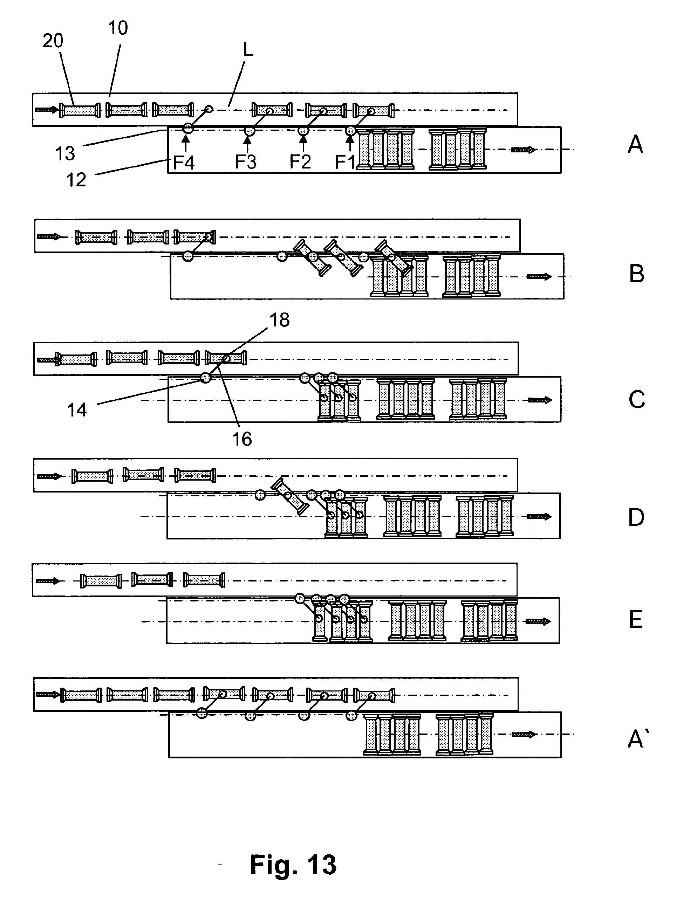

Aus Fig. 13 ist ersichtlich, wie fehlende Packungen bzw. Leerstellen auf dem Zufuhrförderband 10 in einer Anordnung mit einem Linearmotor mit linearer Führungsstrecke 13 und vier Förderelementen 14 oder Pickern F1...F4 ausgeglichen werden. Im Standardbetrieb befinden sich keine Leerstellen auf dem Zufuhrförderband 10, und die vier Förderelemente 14 heben mit ihren an Schwenkarmen 16 befestigten Greifern 18 gleichzeitig vier aufeinander folgende Packungen 20 auf. Im gezeigten Beispiel ist zwischen zwei Packungen 20 eine Leerstelle L vorhanden. Die Picker F1...F3 werden beschleunigt und mit den zugehörigen drei Packungen 20 auf dem Zufuhrförderband 10 rechts von der Leerstelle L synchronisiert, während der Picker F4 in der Ausgangsposition wartet (A, B). Die drei Packungen 20 werden gepickt, die Picker F1...F3 werden verschwenkt, verzögert und bleiben in einer Warteposition (C). Der Picker F1 wird danach beschleunigt und mit einer Packung 20 links von der Leerstelle L synchronisiert. Die Packung 20 wird gepickt und an die drei Packungen 20 in der Warteposition herangeführt (D, E). Anschliessend läuft die Anlage wieder im Standardbetrieb (A').

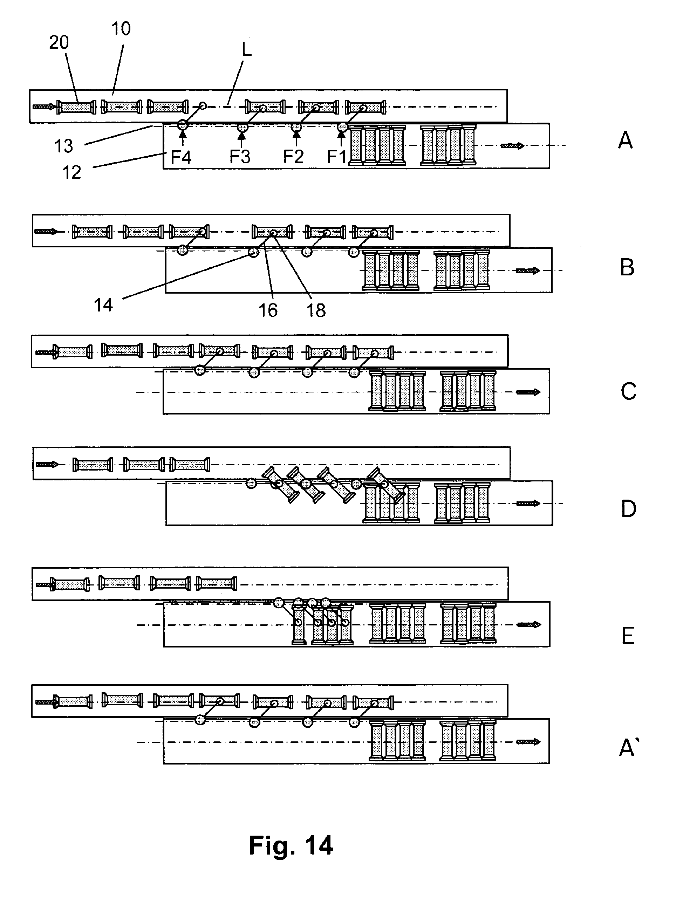

Bei der in Fig. 14 gezeigten Variante einer Leerstellenverarbeitung werden die Picker F1...F3 beschleunigt und mit den zugehörigen drei Packungen 20 auf dem Zufuhrförderband 10 rechts von der Leerstelle L synchronisiert (A). Die drei Packungen 20 werden gepickt und die Picker F1...F3 bleiben in einer Warteposition (B). Der Picker F1 wird danach beschleunigt und mit einer Packung 20 links von der Leerstelle L synchronisiert. Die Packung 20 wird gepickt und an die drei Packungen 20 in der Warteposition herangeführt (C). Nun werden die Picker F1...F4 verzögert und zur Produktablage auf dem Abfuhrförderband 12 gemeinsam verschwenkt (D, E). Anschliessend läuft die Anlage wieder im Standardbetrieb (A').

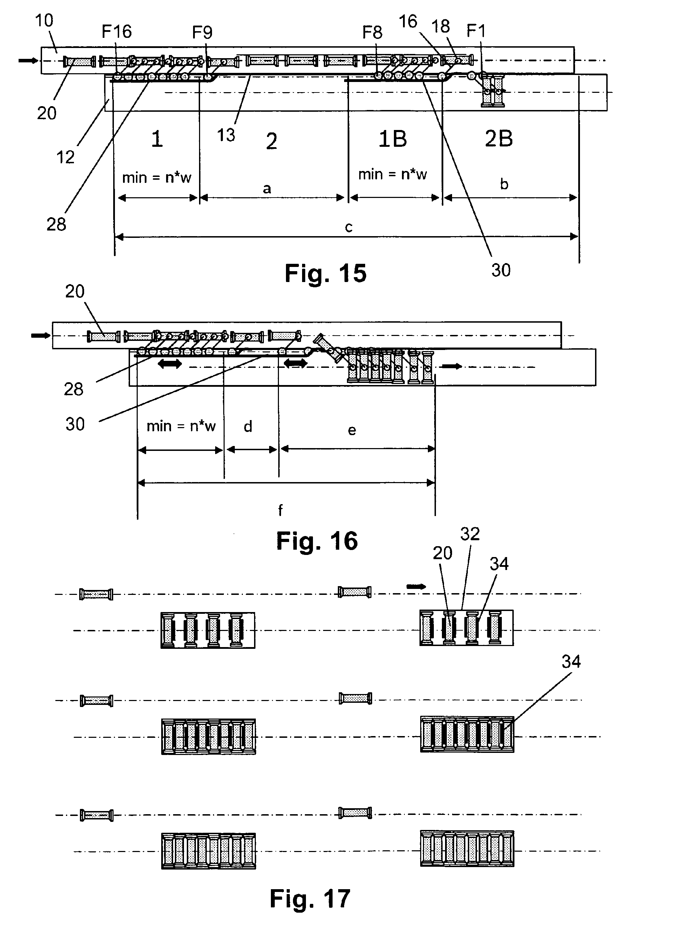

Bei der in Fig. 15 gezeigten Anordnung mit paralleler Anordnung von Zufuhrförderband 10 und Abfuhrförderband 12 sind 16 Förderelemente F1...F16 unabhängig von einander längs der parallel zu den Förderbändern 10, 12 angeordneten Führungsstrecke 13 eines Linearmotors verschiebbar und in zwei Pickergruppen mit je acht Förderelementen F1....F8, F9....F16 aufgeteilt. Jedes der sechzehn Förderelemente 14 ist mit einem Schwenkarm 16 mit Greifer 18 ausgestattet. Die Pick- und Schwenkbewegung wird durch feste Steuerkurven bzw. feststehende Kulissen 28, 30 ausgelöst. Damit werden an definierten Stellen des Mechanismus die Produkte gepickt und an einer definierten Stelle gedreht. Da die Pickposition unveränderbar ist, muss jedes Produkt zum genau richtigen Zeitpunkt gepickt werden, nämlich dann, wenn sich das Produkt im Einlauf an der Pickposition befindet. Um alle Produkte picken zu können, müssen wegen der notwendigen Zeit für den Rücklauf der Pickergruppen mindestens zwei Pickergruppen mit zwei Steuerkurven 28, 30 eingesetzt werden.

Die in Fig. 16 gezeigte Anordnung unterscheidet sich von der Anordnung gemäss Fig. 15 dadurch, dass die Steuerkurven bzw. Kulissen 28, 30 entlang der Führungsstrecke 13 des Linearmotors verschiebbar sind. Die Pick- und Schwenkbewegung wird durch die linear verschiebbaren Steuerkurven 28, 30 ausgelöst. Damit können die Positionen, an denen die Produkte gegriffen bzw. abgelegt werden, verschoben und der aktuellen Produktposition angepasst werden. Damit steht ein Zeitfenster für die Pickvorgänge zur Verfügung. Um alle Produkte picken zu können, müssen auch hier wegen der notwendigen Zeit für den Rücklauf der Pickergruppen mindestens zwei Pickergruppen mit zwei Steuerkurven eingesetzt werden. Um eine kurze Bauform zu erhalten, wird die Pickposition vorteilhaft bei jedem Produkt entgegen der Produktflussrichtung verschoben. So kann der Abstand d zwischen den beiden Pickergruppen, und damit die Länge der Anlage, minimal gehalten werden, ohne dass die Pickergruppen kollidieren. Durch die kurze Baulänge müssen die Picker auch weniger Weg zurücklegen so dass diese Variante gegenüber der Variante mit fixen Steuerkurven eine höhere Leistung erzielt. Die Anordnung ist sehr kompakt, die Länge f ist kürzer als Länge c bei der Anordnung gemäss Fig. 15 mit fixen Steuerkurven.

Fig. 17 zeigt eine Variante der Beladung von Trays 32, wenn direktes Beladen im Sollabstand nicht möglich ist, weil der Abstand kleiner ist als die Breite der Förderelemente bzw. der minimale Abstand zwischen den Förderelementen. Daher wird z.B. in einem ersten Schritt nur jede zweite oder jede dritte etc. Position beladen und anschliessend in einem zweiten Schritt bzw. in nachfolgenden Schritten werden dann die verbleibenden Lücken beladen. Falls die Produkte, wenn sie nicht fixiert werden, verrutschen würden, können z.B. Trennstege 34 eingeführt werden, welche nach dem Beladen, z. B. durch Absenken, wieder entfernt werden.

## Patentansprüche

1. Vorrichtung zum Überführen von Produkten von einem Zufuhrförderband (10) auf ein Abfuhrförderband (12), umfassend einen Linearmotor mit auf einer Führung verschiebbar geführten Förderelementen (14) mit Greifern (18) zur zeitweiligen Aufnahme von Produkten (20),
die wobei Führung als lineare Führungsstrecke (13) ausgebildet ist, **dadurch gekennzeichnet, dass** die Förderelemente (14) zur Aufnahme und Ablage der Produkte (20) auf der Führungsstrecke (13) hin und her verschiebbar sind, wobei bei in Förderrichtung (z) des Zufuhrförderbandes (10) hintereinander in einer Linie zugeführten Produkten (20) das Zufuhrförderband (10), das Abfuhrförderband (12) und die Führungsstrecke (13) zumindest in einem seitlichen Überlappungsbereich parallel nebeneinander angeordnet sind, und bei in Förderrichtung (z) des Zufuhrförderbandes (10) nebeneinander in Reihen zugeführten Produkten (20) das Zufuhrförderband (10) senkrecht zum Abfuhrförderband (12) angeordnet ist und das Abfuhrförderband (12) und die Führungsstrecke (13) parallel zueinander und mit dem Zufuhrförderband (10) zumindest in einem seitlichen Überlappungsbereich nebeneinander angeordnet sind.

2. Vorrichtung nach Anspruch 1, **dadurch gekennzeichnet, dass** die Greifer (18) zur Erzeugung einer Verschiebebewegung quer zur Förderrichtung (z) an einem auf den Förderelementen (14) angeordneten Schwenkarm (16) angeordnet sind.

3. Vorrichtung nach Anspruch 2, **dadurch gekennzeichnet, dass** der Schwenkarm (16) zur Ausführung einer den erforderlichen Verfahrweg der Förderelemente (14) zur Aufnahme und Ablage der Produkte (20) verringernden Schwenkbewegung ausgestaltet ist.

4. Vorrichtung nach einem der Ansprüche 1 bis 3, **dadurch gekennzeichnet, dass** die Greifer (18) über einen gemeinsamen Antrieb, insbesondere über eine gemeinsame Antriebskulisse (22), gleichzeitig schwenkbar, anhebbar und absenkbar sind.

5. Vorrichtung nach einem der Ansprüche 1 bis 3, **dadurch gekennzeichnet, dass** die Greifer (18) über eigene Antriebe zur Ausführung von Schwenk-, Hub- und Verschiebebewegungen individuell steuerbar sind.

6. Vorrichtung nach einem der Ansprüche 1 bis 3, **dadurch gekennzeichnet, dass** die Greifer (18) über feststehende Kulissen (28, 30) an vorbestimmten Punkten schwenkbar, anhebbar und absenkbar sind.

7. Vorrichtung nach Anspruch 6, **dadurch gekennzeichnet, dass** wenigstens zwei Gruppen von Greifern (18) an wenigstens zwei zugeordneten Punkten schwenkbar, anhebbar und absenkbar sind.

8. Vorrichtung nach Anspruch 6 oder 7, **dadurch gekennzeichnet, dass** der Abstand (a) zwischen den Kulissen (28, 30) bzw. den Gruppen von Greifern (18) mindestens der Länge des Ablagebereiches der Produktgruppen entspricht.

9. Vorrichtung nach einem der Ansprüche 1 bis 3, **dadurch gekennzeichnet, dass** die Greifer (18) an durch verschiebbare Kulissen (28, 30) definierten Orten schwenkbar, anhebbar und absenkbar sind, wobei bevorzugt wenigstens zwei Gruppen von Greifern (18) mit wenigstens zwei zugeordneten Kulissen (28, 30) schwenkbar, anhebbar und absenkbar sind.

10. Vorrichtung nach einem der Ansprüche 1 bis 9, **dadurch gekennzeichnet, dass** Verschiebe- und Schwenkbewegungen durch weitere Linearmotoren oder zusätzliche Verschiebeelemente erzeugbar sind.

11. Vorrichtung nach Anspruch 10, **dadurch gekennzeichnet, dass** ein Greifer (18) über eine Scherenkinematik mit wenigstens zwei Verschiebeelementen verbunden ist.

12. Verfahren zum Betrieb einer Vorrichtung nach einem der vorangehenden Ansprüche, **dadurch gekennzeichnet, dass** zur Leistungssteigerung der Vorrichtung die Verfahrwege der Förderelemente (14) von Produktaufnahmepositionen zu Produktablagepositionen und zurück durch überlappende Anordnung eines Produktaufnahmebereichs (M) und eines Produktablagebereichs (N) verkürzt werden, wobei der Produktaufnahmebereich (M) und der Produktablagebereich (N) bevorzugt eine im wesentlichen symmetrische überlappende Anordnung aufweisen.

13. Verfahren nach Anspruch 12, **dadurch gekennzeichnet, dass** Produktgruppen in mehreren Schritten abgelegt werden, wobei zunächst zwischen den Produkten Lücken verbleiben, die in einem der nächsten Ablageschritte aufgefüllt werden.

14. Verfahren nach Anspruch 13, **dadurch gekennzeichnet, dass** der Produktablagebereich durch vorzugsweise versenkbare oder entfernbare Trennmittel (34) eingeteilt ist, so dass die Produkte sich nicht verschieben können, wenn Lücken in den Ablagepositionen bestehen.

## Claims

1. Device for transferring products from a feeder conveyor belt (10) to a discharge conveyor belt (12), comprising a linear motor with conveyor elements (14), which are guided displaceably on a guide and have grippers (18) for temporarily picking up products (20), wherein the guide is designed as a linear guide section (13), **characterized in that** the conveyor elements (14) are displaceable to and fro on the guide section (13) for picking up and depositing the products (20), and, when products (20) are supplied consecutively in a line in the conveying direction (z) of the feeder conveyor belt (10), the feeder conveyor belt (10), the discharge conveyor belt (12) and the guide section (13) are arranged parallel next to one another, at least in a lateral overlapping region, and, when products (20) are supplied in rows next to one another in the conveying direction (z) of the feeder conveyor belt (10), the feeder conveyor belt (10) is arranged perpendicularly to the discharge conveyor belt (12), and the discharge conveyor belt (12) and the guide section (13) are arranged parallel to each other and are arranged next to each other together with the feeder conveyor belt (10), at least in a lateral overlapping region.

2. Device according to Claim 1, **characterized in that** the grippers (18) are arranged on a pivoting arm (16), which is arranged on the conveyor elements (14), in order to produce a displacement movement transversally with respect to the conveying direction (z).

3. Device according to Claim 2, **characterized in that** the pivoting arm (16) is configured to execute a pivoting movement which reduces the required movement distance of the conveyor elements (14) for picking up and depositing the products (20).

4. Device according to one of Claims 1 to 3, **characterized in that** the grippers (18) can be pivoted, raised and lowered simultaneously via a common drive, in particular via a common driving link (22).

5. Device according to one of Claims 1 to 3, **characterized in that** the grippers (18) can be controlled individually via dedicated drives in order to execute pivoting, lifting and displacement movements.

6. Device according to one of Claims 1 to 3, **characterized in that** the grippers (18) can be pivoted, raised and lowered at predetermined points via fixed links (28, 30).

7. Device according to Claim 6, **characterized in that** at least two groups of grippers (18) can be pivoted, raised and lowered at at least two assigned points.

8. Device according to Claim 6 or 7, **characterized in that** the distance (a) between the links (28, 30) or the groups of grippers (18) corresponds at least to the length of the depositing region of the product groups.

9. Device according to one of Claims 1 to 3, **characterized in that** the grippers (18) can be pivoted, raised and lowered at locations defined by displaceable links (28, 30), and preferably at least two groups of grippers (18) can be pivoted, raised and lowered by at least two assigned links (28, 30).

10. Device according to one of Claims 1 to 9, **characterized in that** displacement and pivoting movements can be produced by further linear motors or additional displacement elements.

11. Device according to Claim 10, **characterized in that** a gripper (18) is connected to at least two displacement elements via scissors-type kinematics.

12. Method for operating a device according to one of the preceding claims, **characterized in that**, in order to increase the capacity of the device, the displacement distances of the conveyor elements (14) from product pick up positions to product depositing positions and back are shortened by an overlapping arrangement of a product pick up region (M) and product depositing region (N), the product pick up region (M) and product depositing region (N) preferably having a substantially symmetrical overlapping arrangement.

13. Method according to Claim 12, **characterized in that** product groups are deposited in a plurality of steps, with gaps initially remaining between the products, the gaps being filled in one of the next depositing steps.

14. Method according to Claim 13, **characterized in that** the product depositing region is divided by means of preferably lowerable or removable separating means (34) such that the products cannot be displaced when there are gaps in the depositing positions.

## Revendications

1. Procédé pour transférer des produits depuis une bande transporteuse d'alimentation (10) sur une bande transporteuse d'évacuation (12), comprenant un moteur linéaire avec des éléments de transport (14) guidés de manière déplaçable sur un guide, avec des éléments de préhension (18) pour recevoir temporairement des produits (20),
le guide étant réalisé sous forme de section de guidage linéaire (13),
**caractérisé en ce que** les éléments de transport (14) peuvent être déplacés d'avant en arrière pour recevoir et déposer les produits (20) sur la section de guidage (13), et lorsque les produits (20) sont acheminés les uns derrière les autres en ligne dans la direction de transport (z) de la bande transporteuse d'alimentation (10), la bande transporteuse d'alimentation (10), la bande transporteuse d'évacuation (12) et la section de guidage (13) sont disposées au moins dans une région de chevauchement latérale parallèlement les unes à côté des autres, et lorsque les produits (20) sont acheminés les uns à côté des autres en rangées dans la direction de transport (z) de la bande transporteuse d'alimentation (10), la bande transporteuse d'alimentation (10) est disposée perpendiculairement à la bande transporteuse d'évacuation (12) et la bande transporteuse d'évacuation (12) et la section de guidage (13) sont disposées parallèlement l'une à l'autre et avec la bande transporteuse d'alimentation (10) les unes à côté des autres au moins dans une région de chevauchement latérale.

2. Dispositif selon la revendication 1, **caractérisé en ce que** les éléments de préhension (18) sont disposés sur un bras pivotant (16) disposé sur les éléments de transport (14) en vue de produire un mouvement de déplacement transversalement à la direction de transport (z).

3. Dispositif selon la revendication 2, **caractérisé en ce que** le bras pivotant (16) est configuré pour effectuer un mouvement de pivotement réduisant la course de déplacement nécessaire des éléments de transport (14) pour recevoir et déposer les produits (20).

4. Dispositif selon l'une quelconque des revendications 1 à 3, **caractérisé en ce que** les éléments de préhension (18) peuvent être simultanément pivotés, soulevés et abaissés par le biais d'un entraînement commun, notamment par le biais d'une coulisse d'entraînement commune (22).

5. Dispositif selon l'une quelconque des revendications 1 à 3, **caractérisé en ce que** les éléments de préhension (18) peuvent être commandés individuellement par le biais d'entraînements propres pour effectuer des mouvements de pivotement, de levage et d'abaissement.

6. Dispositif selon l'une quelconque des revendications 1 à 3, **caractérisé en ce que** les éléments de préhension (18) peuvent être pivotés, soulevés et abaissés par le biais de coulisses fixes (28, 30) en des points prédéterminés.

7. Dispositif selon la revendication 6, **caractérisé en ce qu'**au moins deux groupes d'éléments de préhension (18) peuvent être pivotés, soulevés et abaissés au niveau d'au moins deux points associés.

8. Dispositif selon la revendication 6 ou 7, **caractérisé en ce que** la distance (a) entre les coulisses (28, 30) ou les groupes d'éléments de préhension (18) correspond au moins à la longueur de la région de dépôt des groupes de produits.

9. Dispositif selon l'une quelconque des revendications 1 à 3, **caractérisé en ce que** les éléments de préhension (18) peuvent être pivotés, soulevés et abaissés en des endroits définis par des coulisses déplaçables (28, 30), et de préférence au moins deux groupes d'éléments de préhension (18) peuvent être pivotés, soulevés et abaissés avec au moins deux coulisses associées (28, 30).

10. Dispositif selon l'une quelconque des revendications 1 à 9, **caractérisé en ce que** des mouvements de translation et de pivotement peuvent être effectués par d'autres moteurs linéaires ou par des éléments de déplacement supplémentaires.

11. Dispositif selon la revendication 10, **caractérisé en ce qu'**un élément de préhension (18) est connecté par le biais d'une cinématique à ciseaux à au moins deux éléments de déplacement.

12. Procédé pour faire fonctionner un dispositif selon l'une quelconque des revendications précédentes, **caractérisé en ce que**, pour augmenter la puissance du dispositif, les courses de déplacement des éléments de transport (14) depuis des positions de réception des produits dans des positions de dépôt des produits et de retour sont raccourcies par un agencement superposé d'une région de réception de produits (M) et d'une région de dépôt de produits (N), la région de réception de produits (M) et la région de dépôt de produits (N) présentant de préférence un agencement superposé essentiellement symétrique.

13. Procédé selon la revendication 12, **caractérisé en ce que** des groupes de produits sont déposés en plusieurs étapes, des espaces vides subsistant d'abord entre les produits, lesquels espaces vides sont remplis au cours de l'étape de dépôt suivante.

14. Procédé selon la revendication 13, **caractérisé en ce que** la région de dépôt de produits est divisée par des moyens de séparation (34) pouvant de préférence être enfoncés ou éloignés, de telle sorte que les produits ne puissent pas se déplacer lorsqu'il existe des espaces vides dans les positions de dépôt.
